# EUROPÄISCHE PATENTSCHRIFT

(11) **EP 1 949 524 B1**
(45) Veröffentlichungstag und Bekanntmachung des Hinweises auf die Patenterteilung: **20.07.2011**
(21) Anmeldenummer: 06793713.6
(22) Anmeldetag: 21.09.2006
(51) Int. Cl.: H02K 5/22, H02K 7/116, H02K 11/00, E05F 15/16

(54) **GETRIEBE-ANTRIEBSEINHEIT MIT ELEKTRONIK-EINSTECKMODUL**
GEAR DRIVE UNIT COMPRISING A PLUG-IN ELECTRONICS MODULE
UNITE DE TRANSMISSION ET D'ENTRAINEMENT A MODULE ELECTRONIQUE ENFICHABLE

(30) Priorität: 08.11.2005 DE 102005053535
(43) Veröffentlichungstag der Anmeldung: 30.07.2008
(73) Patentinhaber: ROBERT BOSCH GMBH, 70442 Stuttgart (DE)
(72) Erfinder: HUCK, Thomas, 77836 Rheinmuenster (DE); ANDING, Lars-Dirk, 72202 Nagold (DE); MILI, Tarek, 76133 Karlsruhe (DE)
(86) Internationale Anmeldenummer: PCT/EP2006/066591
(87) Internationale Veröffentlichungsnummer: WO 2007/054395

(56) Entgegenhaltungen:
- EP-A- 1 146 318
- EP-A1- 0 911 949
- DE-A1- 19 819 996
- DE-C1- 19 839 333
- DE-U1- 29 911 221

## Beschreibung

### Stand der Technik

Die Erfindung betrifft eine Getriebe-Antriebseinheit mit einem Elektronik-Einsteckmodul, insbesondere zum Verstellen beweglicher Teile im Kraftfahrzeug, mit einer unteren und einer oberen Gehäuseschale nach der Gattung der unabhängigen Ansprüche.

Mit der DE 10352240 A1 ist ein Elektromotor bekannt geworden, dessen Gehäuse aus zwei Halbschalen besteht, die radial zur Ankerwelle monierbar sind. Im Gehäuse sind um den Rotor zwei Permanentmagnete angeordnet, die mittels zwei getrennten magnetischen Rückschlussteilen magnetisch miteinander gekoppelt sind. Die magnetischen Rückschlusselemente werden hierbei durch die radiale Montage der beiden Gehäuseteile gegeneinander verspannt und damit räumlich fixiert. Innerhalb des Gehäuses ist ein Elektronikmodul angeordnet, das mit einem am Gehäuse angeformten Anschluss-Stecker verbunden ist. Bei solch einer Vorrichtung kann das Elektronikmodul nicht separat gefertigt oder variiert werden, wodurch die Flexibilität bezüglich besonderer Kundenwünsche stark eingeschränkt ist.

Mit der DE 29911221 U1 ist eine Antriebsvorrichtung bekannt geworden, bei der zwei schalenförmige Gehäuseteile zu einem gemeinsamen Gehäuse zusammengesetzt werden. Dieses Gehäuse weist einen Steckeranschluss auf.

Die EP-A-1146318 weist ebenfalls eine elektromotorische Antriebsvorrichtung auf, bei der ein Elektronikgehäuse mit einem radialen Fortsatz in eine radial zur Ankerwelle ausgebildeten Aufnahmeschaft eingreift. Im Bereich des Aufnahmeschafts ist hierbei eine Dichtung angeordnet.

Aus der EP-A-0911949 ist ein Elektronikmodul bekannt geworden, bei dem ein Gehäuseteil einen Anschlussstecker sowie eine Schnittstelle aufweist, deren Dichtebene in etwa diagonal zur Einschubrichtung des Elektronikmoduls angeordnet ist. Hierbei greift die im Elektronikmodul angeordnete Leiterplatte radial zur Ankerwelle in das Gehäuse des Elektromotors ein.

### Offenbarung der Erfindung

Die erfindungsgemäße Getriebe-Antriebseinheit und das Elektronik-Einsteckmodul mit den kennzeichnenden Merkmalen der unabhängigen Ansprüche haben den Vorteil, dass durch das Anformen einer Elektronik-Schnittstelle an der unteren Gehäuseschale mit einer umlaufenden Wand, die eine ebene Dichtungsfläche bildet eine sehr kompakt bauende Antriebseinheit mit einer sehr einfachen und dadurch zuverlässigen dicht Geometrie gewährleistet ist. Die untere Gehäuseschale und das Elektronikmodul sind sehr günstig mit schieberlosen Werkzeugen mittels Spritzgießen herstellbar. Somit kann das Elektronikmodul separat entwickelt und gefertigt und trotzdem sehr kostengünstig an die Getriebe-Antriebseinheit angebunden werden.

Durch die in den Unteransprüchen aufgeführten Maßnahmen ergeben sich vorteilhafte Weiterbildungen und Verbesserungen der in den unabhängigen Ansprüchen angegebenen Merkmale. So leidet die Unterschalenstabilität nicht unter der erforderlichen Öffnung for den Einschub, sondern erhält lediglich eine kleine Öffnung für einen Hall-Sensor oder einen in einen Microcontroller integrierten Hall-Sensor. Wahlweise können die Hallsensoren auch durch ein Gehäuse ohne Öffnung durch eine Gehäusewand hindurch die Signale des Ringmagneten erkennen. Das Einschubmodul selbst stellt ein einfach herstellbares "Schalenteil" dar. Die Dichtung zwischen dem Aufsteckelektronikmodul und Motorunterschale liegt in einer Ebene und kann einfach und zuverlässig abdichten. Zur Befestigung sind sowohl Verschraub- als auch Verrastelemente möglich. Die Steckerstabilität kann über einfache Führungskonturen zwischen Elektronik-Einsteckmodul und der Unterschale des Gehäuses realisiert werden. Die Position der Leiterplatte ermöglicht freie Zugänglichkeit der Leiterplatte zur Kunststoffgehäuseschale des Aufsteckelektronikmoduls. Die Kontaktierung der Pins zur Leiterplatte kann mittels Löt- oder Einpresstechnik realisiert werden. Das Gehäuse der Aufsteckelektronik, sowie die Leiterplatte sind skalierbar, d.h. größere Leiterplatteflächen sind realisierbar. Für den Einsatz eines Microcontrollers mit integrierten Hall-Sensoren ist genügend Bauraum vorhanden, da kein Leiterplattenfinger zwischen Ringmagnet und der Getriebegehäusewand eingeführt werden muss.

### Zeichnungen

In den Zeichnungen sind verschiedene Ausführungsbeispiele einer erfindungsgemäßen Vorrichtung dargestellt und in der nachfolgenden Beschreibung näher erläutert. Es zeigen:
Figur 1 eine erfindungsgemäße Getriebe-Antriebseinheit mit einem Elektronik-Einsteckmodul,
Figur 2 einen vergrößerten Ausschnitt der Schnittstelle aus Figur 1
Figur 3 eine weitere Ansicht des Ausführungsbeispiels aus Figur 1
Figur 4 ein weiteres Ausführungsbeispiel mit Elektronik Einsteckmodul im Schnitt, und
Figur 5 eine Draufsicht des Einschubmoduls aus Figur 1

### Beschreibung der Ausführungsbeispiele

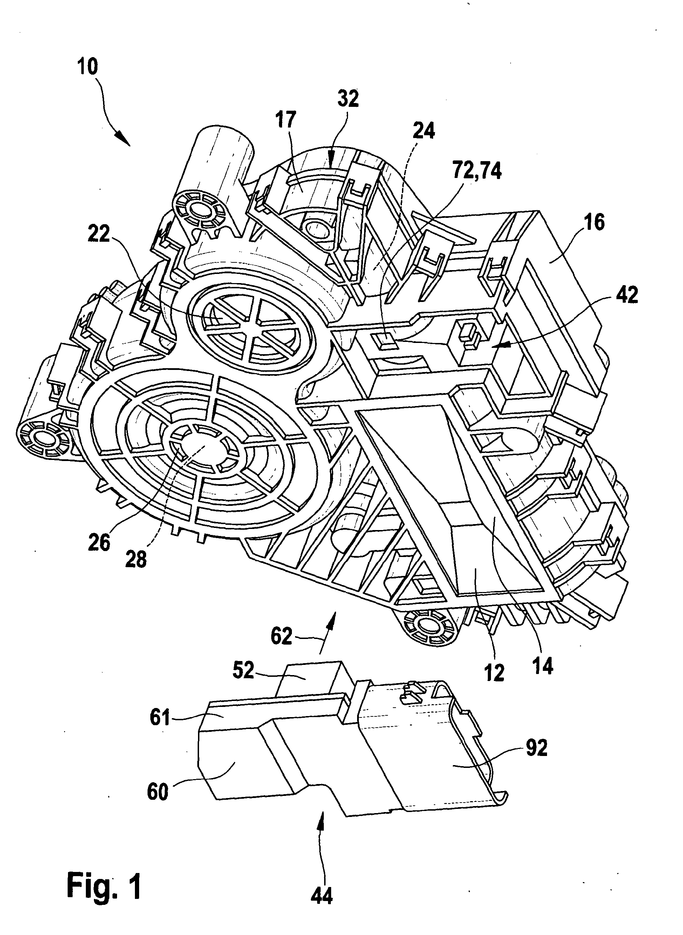

Figur 1 zeigt eine Getriebe-Antriebseinheit 10, insbesondere für einen Fensterheber, die einen Elektromotor 12 aufweist, der von einer unteren Gehäuseschale 14 und einer oberen Gehäuseschale 16 aufgenommen ist. Der Elektromotor 12 weist eine Ankerwelle 16 auf, die in ein Getriebegehäuse 17 ragt, das ebenfalls von den beiden Gehäuseschalen 14 und 16 gebildet wird. Zwischen den Gehäuseschalen 14, 16 ist des Weiteren ein Schneckenrad 22 angeordnet, das mit einer auf der Ankerwelle 18 gelagerten Schnecke 24 kämmt. Das Schneckenzahnrad 24 ist über eine weitere Getriebestufe mittels eines Getriebezahnrads 26 mit einem Abtriebselement 28 gekoppelt, das ein Antriebsmoment für das Verstellen eines beweglichen Teils zur Verfugung stellt. Die beiden Gehäuseschalen 14 und 16, die mit ihren Innenseiten 30 den Elektromotor 12 umschließen, sind an einer Trennebene 32 zusammengefüge, die sich im Wesentlichen parallel zur Ankerwelle 18 erstreckt. Beispielsweise ist an der Unterschale 24 eine umlaufende Dichtkante 34 angeordnet, gegen die eine an der Oberschale 16 angeformte Dichtung 36 gepresst wird. Zur Verriegelung der beiden gehäuseschalen 14, 16 sind an diesen Rastelemente 38 angeordnet, wodurch das Gehäuse 14, 16 wasserdicht abgeschlossen ist. An einer Außenseite 40 der unteren Gehäuseschale 14 ist eine Elektronik-Schnittstelle 42 angeformt, in die ein Elektronik-Einsteckmodul 44 eingefügt werden kann. Die Antriebseinheit 10 und das Elektronik-Modul 44 können separat gefertigt und auf ihre Funktion geprüft werden, wobei das Elektronik-Modul 44 an die Anforderungen der konkreten Anwendung angepasst werden kann (z. B. mit oder ohne Einklemmschutz).

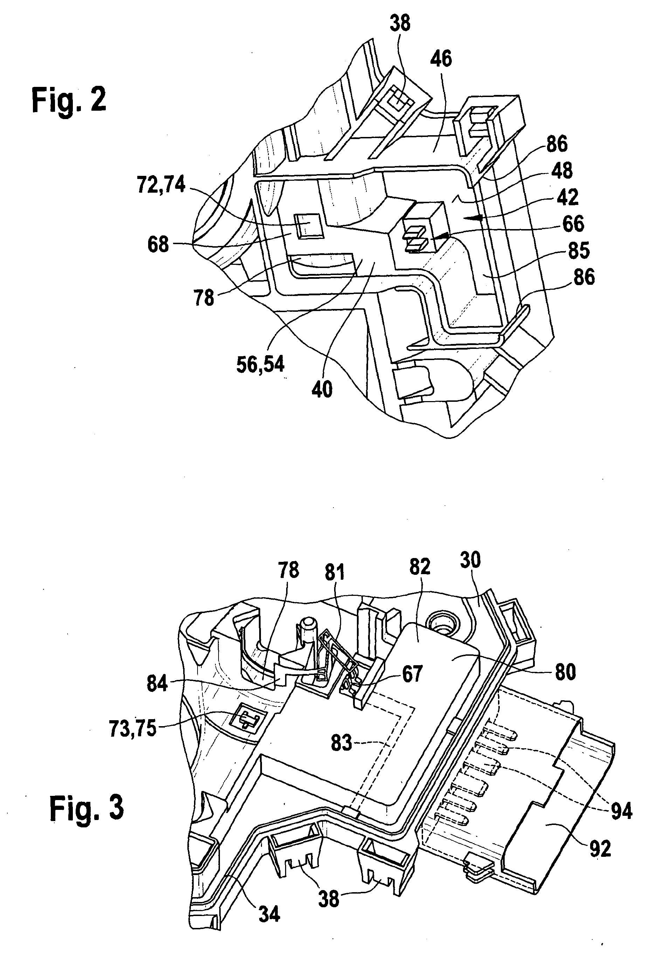

In Figur 2 ist die Schnittstelle 42 an der Außenseite 40 der unteren Gehäuseschale 14 vergrößert dargestellt. Die Schnittstelle 42 weist eine umlaufende Wand 46 auf, die zusammen mit der Außenseite 40 als Grundfläche 48 einen Bauraum 50 für die Elektronikkomponenten 52 des Elektronik-Einschubmoduls 44 bildet. Die Schnittstelle 42 weist eine Dichtungsebene 54 für das Elektronik-Modul 44 auf, die in etwa parallel zur Trennebene 32 verläuft. Dabei verläuft eine Dichtfläche 56 der Schnittstelle 42 innerhalb, bzw. auf der umlaufenden Wand 46. Am Einsteckmodul 44 ist entsprechend eine korrespondierende umlaufende Dichtung 58 angeordnet, die das schalenförmige Gehäuse 60 des Elektronikmoduls wasserdicht gegenüber dem Bauraum 50 abdichtet. Der Bauraum 50 erstreckt sich dabei in radialer Richtung 62, die der Einschubrichtung 62 entspricht, über die Ankerwelle 18 hinaus, so dass auch größere Elektronikkomponenten 52, wie beispielsweise ein Relais 64 im Bauraum 50 untergebracht werden können. Zur elektrischen Kontaktierung des Elektromotors 12 sind innerhalb der Schnittstelle 42 Motorstrom-Kontakte 66 durch die Wand 68 der unteren Gehäuseschale 14 durchgeführt, die beim Einstecken des Elektronik-Moduls 44 in an diesem angeordnete Gegenkontakte 70 greifen. Zur Drehzahlerfassung des Antriebs 10 ist in der Schnittstelle 42 eine Aussparung 72 ausgeformt, in die entsprechende Drehzahlaufnehmer 73 des Elektronik-Einsteckmoduls 44 eingefügt werden können. Beispielsweise ist die Aussparung 72 als Durchbruch 74 durch die Wand 68 ausgebildet, wodurch ein direkter Zugang zu einem auf der Ankerwelle 18 angeordneten Ringmagneten 76 geschaffen ist.

In Figur 3 ist der Durchbruch 74 von der Innenseite 30 der unteren Gehäuseschale 14 zu sehen, wobei zur besseren Sicht der Elektromotor 12 mit der Ankerwelle 18 nicht dargestellt ist. Der Durchbruch 74 ist axial unmittelbar neben einer Lagerstelle 78, beispielsweise einer Aufnahme 78 für ein Kalottenlager der Ankerwelle 18 angeordnet. Durch den Durchbruch 74 greift der Drehzahlaufnehmer 73 des eingesteckten Elektronikmoduls 44, wobei die Größe des Durchbruchs 74 unwesentlich größer ist als der eingreifende Drehzahlsensor 73, um die mechanische Stabilität der Gehäuseschale 14 nicht zu schwächen. Der Drehzahlsensor 73 ist hier als Hallsensor 75, insbesondere als Doppelhallsensor 75 ausgebildet. In einer weiteren Ausgestaltung kann der/die Hallsensor(en) 75 auch als ASIC-Baustein in eine Mikroprozessor integriert sein, wobei vorzugsweise nur der Sensorikteil 73 durch den Durchbruch 74 bzw. in eine Aussparung 72 mit einer Wand zwischen dem Ringmagneten 76 und dem Drehzahlsensor 73 eingreift. Auf der Innenseite 30 ist gegenüber der Schnittstelle 42 ein Substrat 80 für elektrische Verbindungen 81 angeordnet, das beispielsweise ein mit einem Kunstoffkörper 82 umspritztes Stanzgitter 83 aufweist. An dem Substrat 80 sind auch die inneren Anschluss-Kontakte 67 der Motorstromdurchführung 66 angeordnet, die mit den Bürsten 84 des Elektromotors 12 verbunden sind. In Figur 3 sind auch die Verrastelemente 38 gut zu erkennen, die entlang der Dichtkante 34 an der Gehäuseschale 14 angeformt sind.

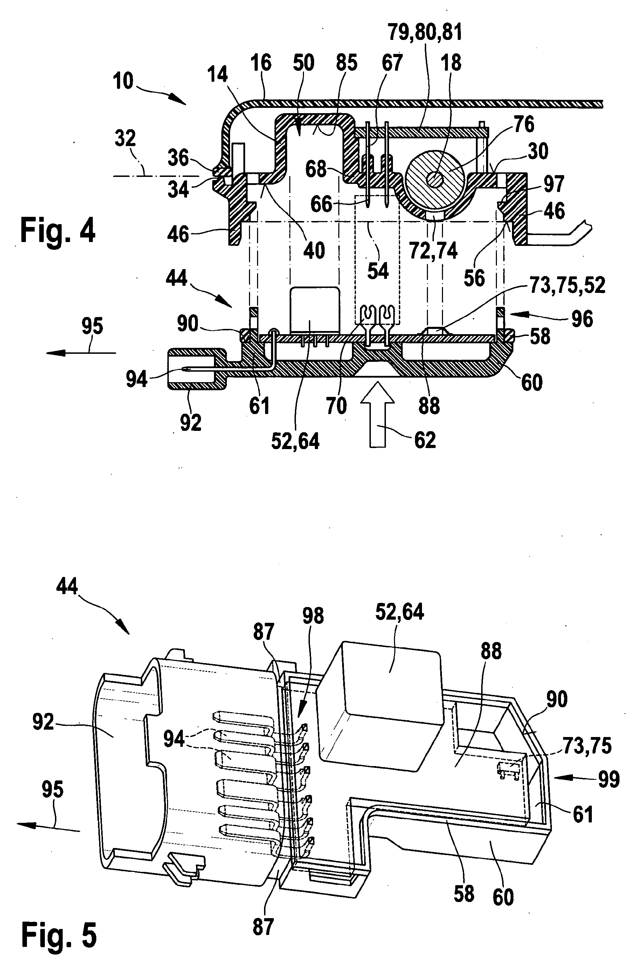

In Figur 4 ist ein schematischer Schnitt durch eine weitere Ausführung einer Antriebseinheit 10 dargestellt. Zwischen der unteren und der oberen Gehäuseschale 14, 16 ist die Ankerwelle 18 angeordnet wobei die Trennebene 32 mit der Dichtung 36 näherungsweise über den gesamten Umfang in einer Ebene liegt. Die untere Gehäuseschale 14 bildet im Bereich der Schnittstelle 42 eine Vertiefung 85 zur oberen Gehäuseschale 16 hin, um genügend Bauraum 50 für große Elektronikkomponenten 52 zu schaffen. Auf der Innenseite 30 ist als Substrat 80 eine Leiterplatte 79 angeordnet, die mit den durch die Wand 68 durchgeführten Motorstromkontakten 66 verbunden ist und die elektrische Verbindungen 81 zu den Bürsten 84 herstellt. Das Elektronik-Einsteckmodul 44 weist ein schalenförmiges Gehäuse 60 mit einer umlaufenden Seitenwand 61 auf, in dem als Träger für die Elektronikkomponenten 52 eine Leiterplatte 88 gelagert ist. Auf der Leiterplatte 88 sind die Gegenkontakte 70 derart angeordnet, dass diese beim Einstecken des Elektronikmoduls 44 in Einsteckrichtung 62 direkt mit den Motorstromkontakten 66 verbunden werden. Gleichzeitig wird der Drehzahlsensor 73 beim Einstecken in die Aussparung 72 eingeschoben, so dass dieser unmittelbar gegenüber dem Umfang des Ringmagneten 76 angeordnet ist. Weitere Elektronikkomponenten, wie das Relais 52 ragen in die Vertiefung 85 der unteren Gehäuseschale 14. Das Elektronikmodul wird mit seiner umlaufenden Seitenwand 61 beim Einstecken innerhalb der umlaufenden Wand 46 der Schnittstelle 42 geführt, bis die Seitenwand 61 mit ihrer Stirnfläche 90 an der umlaufenden Dichtfläche 56 der Dichtebene 54 anliegt. Zwischen der Stirnflache 90 und der Dichtfläche 56 ist eine Dichtung 58 angeordnet, die vorzugsweise an der Seitenwand 61 angespritzt ist und den Bauraum 50 gegen Wasser und Schmutz abdichtet. Das Elektronikmodul 44 weist einen Anschluss-Stecker 92 mit Steckerpins 94 auf, die mit der Leiterplatte 88 verbunden sind, und sich in tangentialer Richtung 95 zur Ankerwelle 18 erstrecken. Zur Befestigung des Elektronik-Moduls 44 sind an diesem Schnapphaken 96 ausgebildet, in die an der Schnittstelle 42 angeordnete Rasthaken 97 eingreifen.

In Figur 5 ist nochmals das Elektronik-Einsteckmodul 44 aus Figur 1 vergrößert dargestellt, wobei der Anschluss-Stecker 92 an der Seitenwand 61 angeordnet ist, die im Bereich 98 des Anschluss-Steckers 92 breiter ausgebildet ist, als auf der gegenüberliegenden Seite 99 der Seitenwand 61. Daher ist die Leiterpatte 88 ebenfalls auf der Seite 98 breiter ausgebildet, als auf der Seite 99. Im Bereich 98 zwischen dem Anschluss-Stecker 92 und der Seitenwand 6 weist das Elektronik-Modul 44 Ausformungen 87 auf, die zur Abstützung formschlüssig in entsprechende Abschnitte 86 der umlaufenden Wand 46 der Schnittstelle 44 greifen.

Es sei angemerkt, dass im Rahmen des Schutzbereiches der Patentansprüche die konkrete Anordnung und Ausformung der umlaufenden Wände 46 und 61 variiert werden kann. Anstelle der Rastelemente 96, 97 können auch andere Verbindungsmittel, beispielsweise Schrauben verwendet werden. Bevorzugt findet die erfindungsgemäße Getriebe-Antriebseinheit Anwendung, für Fensterheber oder zur Verstellung anderer beweglicher Teile im Kraftfahrzeug. Das Gehäuse kann außer den zwei schalenförmigen Gehäuseteilen 14, 16 auch noch weitere Gehäuseteile aufweisen.

## Patentansprüche

1. Getriebe-Antriebseinheit (10), insbesondere zum Verstellen beweglicher Teile im Kraftfahrzeug, mit einem eine Ankerwelle (18) aufweisenden Elektromotor (12) und einer unteren Gehäuseschale (14) und einer oberen Gehäuseschale (16), die radial zur Ankerwelle (18) an einer Trennebene (32) zusammenfügbar sind und den Elektromotor (12) umschließen, **dadurch gekennzeichnet, dass** an der unteren Gehäuseschale (14) eine Elektronik-Schnittstelle (42) zur Aufnahme eines Elektronik-Einsteckmoduls (44) angeordnet ist, und die Elektronik-Schnittstelle (42) eine Dichtungsebene (54) zwischen einer Außenseite (40) der unteren Gehäuseschale (14) und dem Elektronik-Einsteckmodul (44) aufweist , die zumindest näherungsweise parallel zur Trennebene (34) angeordnet ist, wobei an der Elektronik-Schnittstelle (42) eine Umfangswand (46) angeformt ist, die sich im wesentlichen in Einsteckrichtung (62) erstreckt und einen zum Einsteckmodul (44) offenen Bauraum (50) bildet, dessen Grundfläche (48) von der Außenseite (40) der unteren Gehäuseschale (14) gebildet ist, wobei die untere Gehäuseschale (14) im Bereich der Elektronik-Schnittstelle (42) eine Vertiefung (85) zur oberen Gehäuseschale (16) hin bildet, um genügend Bauraum (50) für große Elektronikkomponenten (52) zu schaffen.

2. Getriebe-Antriebseinheit (10) nach Anspruch 1, **dadurch gekennzeichnet, dass** an der Dichtungsebene (54) eine umlaufende Axialdichtfläche (56) bezüglich der Einsteckrichtung (62) des Elektronik-Einsteckmodul (44) angeordnet ist.

3. Getriebe-Antriebseinheit (10) nach einem der Ansprüche 1 oder 2, **dadurch gekennzeichnet, dass** die Elektronikschnittstelle (42) eine Aussparung (72) - insbesondere einen Durchbruch (74) - in der unteren Gehäuseschale (14) gegenüberliegend zur Ankerwelle (18) aufweist, in die ein Drehzahlsensor (73) - insbesondere mindestens ein Hallsensor (75) - einfügbar ist.

4. Getriebe-Antriebseinheit (10) nach einem der vorgehenden Ansprüche, **dadurch gekennzeichnet, dass** die Aussparung (72) unmittelbar axial neben einer Lagerstelle (78) der Ankerwelle (18), gegenüber einem auf dieser befestigten Ringmagneten (76) angeordnet ist.

5. Getriebe-Antriebseinheit (10) nach einem der vorgehenden Ansprüche, **dadurch gekennzeichnet, dass** an der Elektronikschnittstelle (42) elektrische Motorstrom-Kontakte (66) durch die Gehäusewand (68) der Gehäuseunterschale (14) durchgeführt, insbesondere eingespritzt sind.

6. Getriebe-Antriebseinheit (10) nach einem der vorgehenden Ansprüche, **dadurch gekennzeichnet, dass** im Bereich der Elektronik-Schnittstelle (42) an einer Innenseite (30) der Gehäuseunterschale (14) ein Trägersubstrat (80, 79, 82) für elektrische Verbindungen (81, 67) angeordnet ist, die insbesondere die Motorstromkontakte (66) mit Bürsten (84) des Elektromotors (12) verbinden.

7. Getriebe-Antriebseinheit (10) nach einem der vorgehenden Ansprüche, **dadurch gekennzeichnet, dass** an der Elektronik-Schnittstelle (42) Rastmittel (97) zur Verrastung mit Gegenrastmittel (96) am Einschubmodul (44) aufweist.

8. Getriebe-Antriebseinheit (10) nach einem der vorgehenden Ansprüche, **dadurch gekennzeichnet, dass** innerhalb der unteren und der oberen Gehäuseschalen (14,16) ein Schneckenrad (22) angeordnet ist, das mit einer Schnecke (24) der Ankerwelle (18) kämmt und das Schneckenrad (22) mit einem weiteren Getriebezahnrad (26) wirkverbunden ist, das ein Abtriebselement (28) zum Verstellen eines beweglichen Teils aufweist.

9. Elektronik-Einsteckmodul (44) zur Verwendung mit einer Getriebe-Antriebseinheit (10) nach einem der vorgehenden Ansprüche, **dadurch gekennzeichnet, dass** das Einsteckmodul (44) eine Dichtung (58) - insbesondere aus thermoplastischen Elastomer - aufweist, die als Axialdichtung (58) mit der zu der Trennebene (34) parallelen Dichtungsebene (54) derart zusammenwirken kann, dass das Einsteck-Elektronikmodul (44) wasserdicht abgeschlossen ist, wobei auf einer Leiterplatte (88) elektronische Bauelemente (52, 75) - insbesondere ein Relais (64)-angeordnet sind, die sich in eingestecktem Zustand in den Bauraum (50) hinein radial über die Ankerwelle (18) hinaus in die Vertiefung (85) in der unteren Gehäuseschale (14) erstrecken.

10. Elektronik-Einsteckmodul (44) nach Anspruch 9, **gekennzeichnet durch** einen elektrischen Anschluss-Stecker (92), dessen Steckerpins (94) tangential zur Ankerwelle (18) und quer zur Einsteckrichtung (62) verlaufen.

11. Elektronik-Einsteckmodul (44) nach Anspruch 10, **dadurch gekennzeichnet, dass** sich eine Seitenwand (61) des Elektronik-Einsteckmoduls (44) in Einsteckrichtung (62) erstreckt und an einer Seite (98) der Seitenwand (61) die Steckerpins (94) des Anschluss-Steckers (92) angeordnet sind, und die Seite (98) beim Anschluss-Stecker (92) breiter ausgebildet ist, als die dieser gegenüberliegenden Seite (99) der Seitenwand (61).

12. Elektronik-Einsteckmodul (44) nach einem der Ansprüche 9 bis 11, **gekennzeichnet durch** eine Leiterplatte (88), die sich in einer Ebene (54) quer zur Einsteckrichtung (62) erstreckt und an deren der Ankerwelle (18) zugewandten Seite zumindest Teile einer Drehzahlerfassungsvorrichtung (73) - insbesondere ein Hallsensorsystem (75) - angeordnet sind.

13. System zum elektrischen Verstellen beweglicher angeordneter Teile im Kraftfahrzeug, insbesondere Fensterscheiben, bei dem eine Getriebe-Antriebseinheit (10) nach einem der Ansprüche 1 bis 8 mit einem Elektronik-Einsteckmodul (44) nach einem der Ansprüche 9 bis 12 kombiniert ist.

## Claims

1. Gear drive unit (10), in particular for adjusting moving parts in a motor vehicle, having an electric motor (12), which has an armature shaft (18), and a lower housing shell (14) and an upper housing shell (16) which can be joined radially with respect to the armature shaft (18) at a separating plane (32) and surround the electric motor (12), **characterized in that** an electronics interface (42) for accommodating an electronics insertion module (44) is arranged on the lower housing shell (14), and the electronics interface (42) has a sealing plane (54) between an outer face (40) of the lower housing shell (14) and the electronics insertion module (44), which sealing plane is arranged at least approximately parallel to the separating plane (34), with a peripheral wall (46) being integrally formed on the electronics interface (42) and extending substantially in the insertion direction (62) and forming an installation space (50) which is open to the insertion module (44), the base area (48) of the said installation space being formed by the outer face (40) of the lower housing shell (14), with the lower housing shell (14) forming, in the region of the electronics interface (42), a recess (85) in the direction of the upper housing shell (16) in order to create enough installation space (50) for large electronics components (52).

2. Gear drive unit (10) according to Claim 1, **characterized in that** a peripheral axial sealing face (56) with respect to the insertion direction (62) of the electronics insertion module (44) is arranged on the sealing plane (54).

3. Gear drive unit (10) according to either of Claims 1 and 2, **characterized in that** the electronics interface (42) has a cutout (72) - in particular an aperture (74) - in the lower housing shell (14) opposite the armature shaft (18) into which a rotation speed sensor (73) - in particular at least one Hall sensor (75) - can be inserted.

4. Gear drive unit (10) according to one of the preceding claims, **characterized in that** the cutout (72) is arranged directly axially next to a bearing point (78) of the armature shaft (18), opposite a ring magnet (76) which is attached to it.

5. Gear drive unit (10) according to one of the preceding claims, **characterized in that** electrical motor current contacts (66) are passed, in particular injected, through the housing wall (68) of the lower housing shell (14) at the electronics interface (42).

6. Gear drive unit (10) according to one of the preceding claims, **characterized in that** a support substrate (80, 79, 82) for electrical connections (81, 67) which connect, in particular, the motor current contacts (66) to brushes (84) of the electric motor (12) is arranged in the region of the electronics interface (42) on an inner face (30) of the housing lower shell (14).

7. Gear drive unit (10) according to one of the preceding claims, **characterized in that** latching means (97) for forming a latching connection with mating latching means (96) on the insert module (44) are arranged on the electronics interface (42).

8. Gear drive unit (10) according to one of the preceding claims, **characterized in that** a worm gear (22) is arranged within the lower and the upper housings shells (14, 16), the said worm gear meshing with a worm (24) of the armature shaft (18) and the worm gear (22) being operatively connected to a further gear wheel (26) which has an output drive element (28) for adjusting a moving part.

9. Electronics insertion module (44) for use with a gear drive unit (10) according to one of the preceding claims, **characterized in that** the insertion module (44) has a seal (58) - in particular composed of a thermoplastic elastomer - which can interact as an axial seal (58) with the sealing plane (54), which is parallel to the separating plane (34), in such a way that the insertion electronics module (44) is closed off in a water-tight manner, with electronic components (52, 75) - in particular a relay (64) - being arranged on a printed circuit board (88), the said electronic components extending into the installation space (50) radially beyond the armature shaft (18) into the recess (85) in the lower housing shell (14) in the inserted state.

10. Electronics insertion module (44) according to Claim 9, **characterized by** an electrical connection plug (92), of which the plug pins (94) run tangentially to the armature shaft (18) and transverse to the insertion direction (62).

11. Electronics insertion module (44) according to Claim 10, **characterized in that** a side wall (61) of the electronics insertion module (44) extends in the insertion direction (62) and the plug pins (94) of the connection plug (92) are arranged on one face (98) of the side wall (61), and the face (98) at the connection plug (92) is wider than the face (99) of the side wall (61) which is opposite the said face.

12. Electronics insertion module (44) according to one of Claims 9 to 11, **characterized by** a printed circuit board (88) which extends in a plane (54) transverse to the insertion direction (62) and at least parts of a rotation speed detection apparatus (73) - in particular a Hall sensor system (75) - are arranged on that face of the said printed circuit board which faces the armature shaft (18).

13. System for electrically adjusting moving parts in a motor vehicle, in particular window panes, in which a gear drive unit (10) according to one of Claims 1 to 8 is combined with an electronics insertion module (44) according to one of Claims 9 to 12.

## Revendications

1. Unité d'entraînement et de transmission (10), en particulier pour déplacer des pièces mobiles dans un véhicule automobile, doté d'un moteur électrique (12) qui présente un arbre d'induit (18), ainsi que d'une coquille inférieure de boîtier (14) et d'une coquille supérieure de boîtier (16) qui peuvent être assemblées radialement par rapport à l'arbre d'induit (18) sur un plan de séparation (32) et qui entourent le moteur électrique (12),
**caractérisée en ce que**
une interface d'électronique (42) qui reprend un module (44) d'enfichage d'électronique est disposée sur la coquille inférieure de boîtier (14),
**en ce que** l'interface d'électronique (42) présente entre le côté extérieur (40) de la coquille inférieure de boîtier (14) et le module (44) d'enfichage d'électronique un plan d'étanchéité (54) qui est disposé au moins approximativement en parallèle au plan de séparation (34),
**en ce qu'**une paroi périphérique (46) qui s'étend essentiellement dans la direction d'enfichage (62), qui forme un espace de montage (50) ouvert en direction du module d'enfichage (44) et dont la surface de base (48) est formée par le côté extérieur (40) de la coquille inférieure de boîtier (14) est formée sur l'interface d'électronique (42) et
**en ce que** la coquille inférieure de boîtier (14) forme au niveau de l'interface d'électronique (42) un creux (85) par rapport à la coquille supérieure de boîtier (16) pour créer un espace de montage (50) suffisant pour de gros composants électroniques (52).

2. Unité d'entraînement et de transmission (10) selon la revendication 1, **caractérisée en ce qu'**une surface périphérique d'étanchéité axiale (56) par rapport à la direction d'enfichage (62) du module (44) d'enfichage d'électronique est disposée sur le plan d'étanchéité (54).

3. Unité d'entraînement et de transmission (10) selon l'une des revendications 1 ou 2, **caractérisée en ce que** l'interface d'électronique (42) présente face à l'arbre d'induit (18) une découpe (72), en particulier une perforation (74) dans la coquille de boîtier (14), dans laquelle un détecteur (73) de vitesse de rotation et en particulier au moins un détecteur de Hall (75) peuvent être insérés.

4. Unité d'entraînement et de transmission (10) selon l'une des revendications précédentes, **caractérisée en ce que** la découpe (72) est disposée axialement directement à côté de l'emplacement d'un palier (78) de l'arbre d'induit (18), face à un aimant annulaire (76) fixé sur ce dernier.

5. Unité d'entraînement et de transmission (10) selon l'une des revendications précédentes, **caractérisée en ce que** des contacts électriques (66) du courant de moteur sont passés à travers la paroi (68) de la coquille inférieure de boîtier (14) sur l'interface d'électronique (42), et en particulier y sont incorporés par injection.

6. Unité d'entraînement et de transmission (10) selon l'une des revendications précédentes, **caractérisée en ce qu'**au niveau de l'interface d'électronique (42), sur un côté intérieur (30) de la coquille inférieure de boîtier (14) est disposé un substrat de support (80, 79, 82) pour des raccordements électriques (81, 67) qui relient en particulier les contacts (66) de courant de moteur à des balais (84) du moteur électrique (12).

7. Unité d'entraînement et de transmission (10) selon l'une des revendications précédentes, **caractérisée en ce que** des moyens d'encliquetage (97) destinés à être encliquetés sur des moyens complémentaires d'encliquetage (96) prévus sur le module d'enfichage (44) sont disposés sur l'interface d'électronique (42).

8. Unité d'entraînement et de transmission (10) selon l'une des revendications précédentes, **caractérisée en ce qu'**une roue à vis (22) qui s'engrène sur l'arbre d'induit (18) par une vis (24) est disposée à l'intérieur de la coquille inférieure et de la coquille supérieure de boîtier (14, 16), la roue à vis (22) coopérant avec une autre roue dentée (26) de transmission qui présente un élément de sortie (28) qui déplace une pièce mobile.

9. Module (44) d'enfichage d'électronique destiné à être utilisé sur une unité d'entraînement et de transmission (10) selon l'une des revendications précédentes, **caractérisé en ce que** le module d'enfichage (44) présente un joint d'étanchéité (58), en particulier en élastomère thermoplastique, qui peut coopérer en tant que joint d'étanchéité axiale (58) avec le plan d'étanchéité (54) parallèle au plan de séparation (34) de telle sorte que le module électronique d'enfichage (44) soit fermé de manière étanche à l'eau, des composants électroniques (52, 75), en particulier un relais (64), étant disposés sur une carte de circuit (88) et, en position enfichée, s'étendant radialement dans l'espace de montage (50) au-delà de l'arbre d'induit (18) pour pénétrer dans le creux (85) ménagé dans la coquille inférieure de boîtier (14).

10. Module (44) d'enfichage d'électronique selon la revendication 9, **caractérisé par** une fiche (92) de raccordement électrique dont les goujons d'enfichage (94) s'étendent tangentiellement à l'arbre d'induit (18) et transversalement par rapport à la direction d'enfichage (62).

11. Module (44) d'enfichage d'électronique selon la revendication 10, **caractérisé en ce qu'**une paroi latérale (61) du module (44) d'enfichage d'électronique s'étend dans la direction d'enfichage (62) et **en ce que** les goujons d'enfichage (94) de la fiche de raccordement (92) sont disposés sur un côté (98) de la paroi latérale (61), le côté (98) qui correspond à la fiche de raccordement (92) étant plus large que le côté (99) de la paroi latérale (61) qui lui est opposé.

12. Module (44) d'enfichage d'électronique selon l'une des revendications 9 à 11, **caractérisé par** une carte de circuit (88) qui dans un plan (54) transversal par rapport à la direction d'enfichage (62), au moins des parties d'un dispositif de détection de vitesse de rotation (73), en particulier un système (75) de détecteur de Hall, étant disposées sur le côté du dispositif d'enfichage tourné vers l'arbre d'induit (18).

13. Système de déplacement électrique de pièces mobiles dans un véhicule automobile, en particulier des vitres de fenêtre, dans lequel une unité (10) d'entraînement et de transmission selon l'une des revendications 1 à 8 est combinée avec un module (44) d'enfichage d'électronique selon l'une des revendications 9 à 12.
